# EUROPÄISCHE PATENTANMELDUNG

(11) **EP 4 369 240 A1**
(43) Veröffentlichungstag der Anmeldung: **15.05.2024**
(21) Anmeldenummer: 22206970.0
(22) Anmeldetag: 11.11.2022
(51) Int. Cl.: G06F 30/20, G06F 11/26, G06F 11/263

(54) **SIMULATIONSVORRICHTUNG ZUR AUSGABE VON BILDDATEN EINER VIRTUELLEN UMGEBUNG EINES FAHRZEUGS AN EIN STEUERGERÄT, TESTAUFBAU MIT EINER SOLCHEN SIMULATIONSVORRICHTUNG UND VERFAHREN ZUR AUSGABE VON BILDDATEN EINER VIRTUELLEN UMGE-BUNG EINES FAHRZEUGS AN EIN STEUERGERÄT**

(71) Anmelder: dSPACE GmbH, 33102 Paderborn (DE)
(72) Erfinder: Gehrke, Matthias, 33102 Paderborn (DE); Tigges, Daniel, 33102 Paderborn (DE); Meyer, Philipp, 33102 Paderborn (DE); Schumacher, Tobias, 33102 Paderborn (DE); Wiczonke, Uwe, 33102 Paderborn (DE)

(57) **Zusammenfassung**

Es wird eine Simulationsvorrichtung (SV) und ein Verfahren zur Ausgabe von Bilddaten (BD) einer virtuellen Umgebung eines Fahrzeugs (EGO) an ein Steuergerät (SG) vorgeschlagen, welche ausgebildet sind, in Abhängigkeit von den Bilddaten (BD) mindestens eine Fahrzeugfunktion auszuführen. Dabei sind vorgesehen:
ein Umgebungssimulator (US), der ausgebildet ist, die Umgebung des Fahrzeugs (EGO) zu simulieren, und Daten (Da) über die Umgebung an einen Sensorsimulator (SeSi) zu übertragen, welcher ausgebildet ist, in Abhängigkeit von den Daten (Da) über die Umgebung wenigstens einen Sensor (SE1, SE2, SE3, SE4) des Fahrzeugs (EGO) zur Erfassung der Umgebung zu simulieren und die Bilddaten (BD) in Abhängigkeit von seiner Simulation auszugeben,
wobei der Umgebungssimulator (US) ausgebildet ist, die Daten (Da) über die Umgebung zu Simulationstaktzeitpunkten zu ermitteln und in Abhängigkeit von den Simulationstaktzeitpunkten an den Sensorsimulator (SeSi) zu übertragen, und wobei der Sensorsimulator (SeSi) ausgebildet ist, die Bilddaten (BD) zu Sensortaktzeitpunkten auszugeben, wobei Informationen über die Sensortaktzeitpunkte in dem Umgebungssimulator (US) hinterlegt sind, wobei der Umgebungssimulator (US) ausgebildet ist, die Daten (Da) in Abhängigkeit von den Sensortaktzeitpunkten an den Sensorsimulator (SeSi) zu übertragen.

## Beschreibung

### Technisches Gebiet

Die Anmeldung betrifft eine Simulationsvorrichtung zur Ausgabe von Bilddaten einer virtuellen Umgebung eines Fahrzeugs an ein Steuergerät, einen Testaufbau mit einer solchen Simulationsvorrichtung und ein Verfahren zur Ausgabe von Bilddaten einer virtuellen Umgebung eines Fahrzeugs an ein Steuergerät.

### Hintergrund

Die Druckschrift D. Gruyer et al.: Development of Full Speed Range ACC with SiVIC, a virtual platform for ADAS Prototyping, Test and Evaluation, 2013 IEEE Intelligent Vehicles Symposium, June 23-26, 2013, Gold Coast, Australia offenbart, dass die sogenannte SiVIC Plattform eine Simulation von Sensordaten und virtuelle Straßenumgebungsdaten mit realistischen dynamischen Modellen von mobilen Einheiten wie Fahrzeugen, realistischen Sensoren und weiteren Sensoren bereitstellt. Damit kann eine Fahrzeugfunktion direkt unter realistischen Bedingungen simuliert werden. Die Druckschrift Van Hoa Nguyen et al.: On Conceptual Structuration and Coupling Methods of Co-Simulation Frameworks in Cyber-Physical Energy System Validation, Energies, 2017,10, 1977 offenbart eine sogenannte Co-Simulation als eine aufkommende Methode für Cyber-Physical Energy Systems und dabei deren Beurteilung und Validierung. Die kombinierte Kombination von Simulationseinrichtungen in verschiedenen Bereichen zu einem gemeinsamen Experiment soll eine ganzheitliche Betrachtung eines solchen Cyber-Physical Energy System auf einer Systemebene ermöglichen. Dabei wird eine Strukturierung der Co-Simulation vorgestellt. Verschiedene Methoden zur Verbindung von solch unterschiedlichen Simulatoren werden untersucht und klassifiziert.

Aufgabe der Anmeldung ist es, bei einer solchen Co-Simulation in einer Simulationsvorrichtung zur Ausgabe von Bilddaten eine Übertragung von Daten zwischen den Simulationen zu gewährleisten, bei der die beiden Simulationen möglichst synchrone Daten austauschen.

Diese Aufgabe wird durch die Merkmalskombinationen der unabhängigen Patentansprüche gelöst.

### Übersicht

Es wird eine Simulationsvorrichtung zur Ausgabe von Bilddaten einer virtuellen Umgebung eines Fahrzeugs an ein Steuergerät vorgeschlagen, wobei das Steuergerät ausgebildet ist, in Abhängigkeit von den Bilddaten mindestens eine Fahrzeugfunktion auszuführen. Die Simulationsvorrichtung weist einen Umgebungssimulator auf, der ausgebildet ist, die Umgebung des Fahrzeugs zu simulieren, und Daten über die Umgebung an einen Sensorsimulator zu übertragen, der ausgebildet ist, in Abhängigkeit von den Daten über die Umgebung wenigstens einen Sensor des Fahrzeugs zur Erfassung der Umgebung zu simulieren und die Bilddaten in Abhängigkeit von seiner Simulation auszugeben. Der Umgebungssimulator ist dabei ausgebildet, die Daten über die Umgebung zu Simulationstaktzeitpunkten zu ermitteln und in Abhängigkeit von den Simulationstaktzeitpunkten an den Sensorsimulator zu übertragen. Der Sensorsimulator ist dabei ausgebildet, die Bilddaten zu Sensortaktzeitpunkten auszugeben, wobei Informationen über die Sensortaktzeitpunkte in dem Umgebungssimulator hinterlegt sind. Der Umgebungssimulator ist dabei ausgebildet, die Daten in Abhängigkeit von den Sensortaktzeitpunkten an den Sensorsimulator zu übertragen.

Weiterhin ist es vorgesehen, einen Testaufbau mit einer solchen Simulationsvorrichtung und dem Steuergerät vorzusehen, das in Abhängigkeit von den Bilddaten hinsichtlich seiner Fahrzeugfunktion testbar ist.

Darüber hinaus ist ein Verfahren zur Ausgabe von Bilddaten einer virtuellen Umgebung eines Fahrzeugs an ein Steuergerät vorgesehen, das in Abhängigkeit von den Bilddaten mindestens eine Fahrzeugfunktion ausführt und damit hinsichtlich dieser Fahrzeugfunktion getestet wird, wobei das Verfahren auf einer Simulationsvorrichtung ausgeführt wird, und zwar mit folgenden Verfahrensschritten:
Ein Umgebungssimulator simuliert die Umgebung des Fahrzeugs und überträgt die Daten über die Umgebung an einen Sensorsimulator.

Der Sensorsimulator simuliert mindestens einen Sensor des Fahrzeugs zur Erfassung der Umgebung in Abhängigkeit von den Daten über die Umgebung und gibt die Bilddaten in Abhängigkeit von dieser Simulation aus, wobei der Umgebungssimulator die Daten über die Umgebung zu den Simulationstaktzeitpunkten ermittelt und in Abhängigkeit von den Simulationstaktzeitpunkten an den Sensorsimulator überträgt, und wobei der Sensorsimulator die Bilddaten zu Sensortaktzeitpunkten ausgibt, wobei Informationen über die Sensortaktzeitpunkte in dem Umgebungssimulator hinterlegt sind, wobei der Umgebungssimulator die Daten in Abhängigkeit von den Sensortaktzeitpunkten an den Sensorsimulator überträgt.

Eine Simulationsvorrichtung ist vorliegend eine Einrichtung, die für ein Steuergerät vorgesehen ist, um die Umgebung für das Steuergerät, die es im einem Fahrzeug vorfinden würde, zu simulieren und damit das Steuergerät mit dieser Umgebung auf seine Funktionalität hin zu testen. Dafür hat die Simulationsvorrichtung Rechner, die die Daten über die Umgebung für das Steuergerät erzeugen und an das Steuergerät übermitteln, sodass das Steuergerät in seiner Funktionalität ausreichend geprüft werden kann. Dies ist insbesondere bei sicherheitsrelevanten Funktionen von großer Bedeutung, aber auch bei anderen Funktionen wie beispielsweise Komfortfunktionen ist das notwendig, um dem Nutzer des Fahrzeugs eine Funktion zu gewährleisten, die fehlerfrei ist. Denn auch eine nicht funktionierende Komfortfunktion kann den Fahrer derart beeinflussen, dass es zu gefährlichen Situationen kommen kann. Solch eine Simulationsvorrichtung ist insbesondere bei elektronischen Systemen von großer Bedeutung, denn so können die verschiedensten Zustände geprüft werden, um so die Software und Hardware auf dem Steuergerät in ihrer Funktion zu testen, wie es beispielsweise in einem Realtest kaum möglich wäre. Außerdem ermöglicht eine solche Simulationsvorrichtung die drastische Reduzierung von Tests am realen Fahrzeug, die sowohl personal- und damit kostenintensiv sind, als auch sicherheitskritisch sein können.

Die Simulationsvorrichtung gibt demnach Bilddaten einer virtuellen Umgebung eines Fahrzeugs an ein solches Steuergerät aus, damit dieses Steuergerät in Abhängigkeit von diesen simulierten Bilddaten seine Fahrzeugfunktion ausführt, um damit zunächst zu prüfen, ob das Steuergerät die Bilddaten richtig interpretiert, und weiter zu prüfen, ob die Fahrzeugfunktion richtig ausgeführt wird. Die Ausgabe der Bilddaten durch den Sensorsimulator zu den Sensortaktzeitpunkten kann dabei der Ausgabe der Bilddaten durch die Simulationsvorrichtung entsprechen. In einem solchen Ausführungsbeispiel gibt dann auch die Simulationsvorrichtung die Bilddaten zu den Sensortaktzeitpunkten an das Steuergerät aus.

Die Bilddaten können bereits vorverarbeitete Daten über die Umgebung wie Ort des verfolgten Objekts, dessen Bewegungsvektor, seine Geschwindigkeit und/oder seine Beschleunigung usw. aufweisen. Eine solche Vorverarbeitung kann in der Sensorsimulation erfolgen oder die Simulationsvorrichtung kann in Ausführungsbeispielen eine Vorverarbeitung der Bilddaten aufweisen, wobei die Vorverarbeitung die von der Sensorsimulation ausgegebenen Bilddaten empfängt. Es ist ebenfalls möglich, von der Sensorsimulation ausgegebene Rohdaten an das Steuergerät zu übertragen, die dann im Steuergerät zunächst weiterverarbeitet werden danach durch die Fahrzeugfunktion verwendet werden.

Auch die Übertragung der Bilddaten an das Steuergerät wird durch die Simulationsvorrichtung so durchgeführt, wie es im Fahrzeug selbst ausgeführt werden würde, um auch hier die Schnittstellen, die das Steuergerät aufweist, und die Qualität der Datenübertragung zu prüfen. Die Daten können beispielsweise über einen Bus übertragen werden, über Punkt-zu-Punkt-Leitungen oder auch über eine drahtlose Funk- oder optische Übertragung. Dabei können die Bilddaten in ein bestimmtes Format eingebettet sein, also in sogenannte Datenrahmen, die auch als Frames bekannt sind.

Die Simulationsvorrichtung ist demnach eine elektronische Einheit die Schnittstellen aufweist, die mit dem Steuergerät verbunden werden können und selbst, wie oben dargestellt Rechenmittel aufweist, um die Bilddaten zu erzeugen.

Die anmeldungsgemäße Simulationsvorrichtung weist einen Umgebungssimulator auf, der die Umgebung des Fahrzeugs simuliert, und Daten über die Umgebung an einen Sensorsimulator überträgt, der in Abhängigkeit von diesen Daten über die Umgebung wenigstens einen Sensor des Fahrzeugs zur Erfassung der Umgebung simuliert und dann die Bilddaten in Abhängigkeit von dieser Simulation ausgibt. D. h. es liegt ein erster Simulator, nämlich der Umgebungssimulator, vor, der beispielsweise gemäß den abhängigen Ansprüchen eine eigene Hardware, bspw. einen eigenen Rechner, aufweist, um die Umgebung des Fahrzeugs zu simulieren. Diese Simulation kann durch vorgegebene Daten initiiert werden, und dann werden die durch diese Simulation erzeugten Daten an den Sensorsimulator übertragen. Der Sensorsimulator simuliert die in diesen Daten angegebenen Objekte in der Umgebung des Fahrzeugs für einen Sensor, der üblicherweise ein Umfeldsensor ist, der optisch oder akustisch die durch diese Daten umfassten Objekte in der Fahrzeugumgebung verfolgen kann. Solche Umfeldsensoren sind z. B. Radar, LIDAR, Ultraschallsensoren und/oder Kamerasensoren.

Damit liegt eine Co-Simulation vor, denn der Umgebungssimulator simuliert diese Fahrzeugumgebung mit den darin befindlichen Objekten, und der Sensorsimulator erfasst und/oder verfolgt diese Objekte mit dem vorgesehenen Umfeldsensor oder den vorgesehenen Umfeldsensoren. Beide Simulatoren simulieren damit Erfassung von solchen Objekten in der Fahrzeugumgebung. In der Realität wird der Umfeldsensor die Bilddaten dann an das Steuergerät übertragen. Da auch der Sensorsimulator seinen eigenen Rechner aufweist, ist zwischen dem Umgebungssimulator und dem Sensorsimulator zur Übertragung der Daten üblicherweise ein Datenkabel vorgesehen. Es können jedoch auch andere Übertragungsmittel vorgesehen sein. Die Übertragung kann optisch, aber auch per Funk oder anderen bekannten Übertragungsmethoden vorgenommen werden.

Sowohl der Umgebungssimulator als auch der Sensorsimulator arbeiten mit einem vorgegebenen Takt. Weichen beide Takte voneinander ab, was üblicherweise der Fall ist, ist für die Übertragung der Daten vom Umgebungssimulator zum Sensorsimulator entscheidend, wann diese Übertragung stattfindet. Die beiden Simulatoren, nämlich der Umgebungssimulator und der Sensorsimulator, sollen möglichst synchron arbeiten. Da ein unterschiedlicher Takt vorliegt, ist vorgesehen, dass der Umgebungssimulator seine Daten zu Zeitpunkten überträgt, die in Abhängigkeit von den Simulationstaktzeitpunkten und den Sensortaktzeitpunkten bestimmt werden. Dafür weist der Umgebungssimulator Informationen über die Sensortaktzeitpunkte auf und kann so die optimalen Zeitpunkte für die Übertragung selbst bestimmen. Somit ist dann gewährleistet, dass die Übertragung der Daten möglichst aktuell ist und keine veralteten Daten der Fahrzeugumgebung vom Umgebungssimulator an den Sensorsimulator übertragen werden.

Dies gilt auch für das entsprechende Verfahren zur Ausgabe von Bilddaten einer virtuellen Umgebung eines Fahrzeugs an ein Steuergerät sowie für den Testaufbau mit der Simulationsvorrichtung und dem Steuergerät.

Unter dem Fahrzeug wird dasjenige verstanden, das die Umfeldsensorik aufweist. Dieses Fahrzeug wird insbesondere als Ego-Fahrzeug bezeichnet.

Der Simulationstakt ist vorzugsweise kleiner als der Sensortakt, d. h. der Umgebungssimulator durchläuft kürzere Takteinheiten und diese dafür entsprechend häufiger. Das Hinterlegen der Informationen über die Sensortaktzeitpunkte bezeichnet das Abspeichern von Daten, aus denen besagte Informationen auslesbar sind, auf einer Speichereinrichtung, die dem Umgebungssimulator zugeordnet ist. Der Simulationstaktzeitpunkt ist nach dem Abschluss einer Neuberechnung der Umgebung des Fahrzeugs gegeben. Demnach liegt nach Abschluss jedes Simulationstakts und damit zu jedem Simulationszeitpunkt auf dem Simulationsrechner eine vollständige Beschreibung der Umgebung des Fahrzeugs vor, die jeweils eine Momentaufnahme der Umgebung des Fahrzeugs abbildet. Der Sensortakt ist unabhängig vom Simulationstakt festgelegt und definiert den Zeitraum zwischen zwei Sensortaktzeitpunkten zur Ausgabe von Bilddaten. Der Sensortakt ist im Normalfall so gewählt, dass er den Sensortakt eines realen Sensormodells nachbildet, zu dessen Simulation der Sensorsimulator eingerichtet ist.

Durch die in den abhängigen Ansprüchen angegebenen Maßnahmen und Weiterbildungen sind vorteilhafte Verbesserungen der in den unabhängigen Patentansprüchen angegebenen Simulationsvorrichtung bzw. des in den unabhängigen Patentansprüchen angegebenen Verfahrens zur Ausgabe von Bilddaten möglich.

Dabei ist beispielsweise vorgesehen, dass der Umgebungssimulator eine Differenz zwischen den Simulationstaktzeitpunkten und den Sensortaktzeitpunkten jeweils bildet und die Daten in Abhängigkeit von dieser Differenz überträgt. Damit kann beispielsweise der Umgebungssimulator den optimalen Zeitpunkt für die Übertragung selbst bestimmen.

Dies wird beispielsweise dadurch erreicht, dass der Umgebungssimulator die Differenz mit einem Schwellenwert vergleicht und die Daten in Abhängigkeit von diesem Vergleich überträgt. Als Schwelle kann beispielsweise eine Zeit vorgegeben sein, und nur dann, wenn die Differenz kleiner als diese Schwelle ist, kann die Übertragung erfolgen. Damit wird dann immer der optimale Zeitpunkt ausgewählt, um möglichst eine Synchronisierung zwischen dem Umgebungssimulator und dem Sensorsimulator zu erhalten. Es kann erforderlich sein, die Differenz nach einer Betragsbildung mit dem Schwellenwert zu vergleichen. D. h. die Bilder, die der Umgebungssimulator durch seine Daten an den Sensorsimulator überträgt, entsprechen dem aktuellen Zustand der Fahrzeugumgebung, sodass der Sensorsimulator mit den richtigen Objekten seine Sensorsimulation durchführt.

In einer Ausführungsform werden die Daten in Rahmen, engl. Frame, übertragen. Aus der Nachrichtentechnik ist dies ein bekanntes Konzept, dass Daten in Rahmen übertragen werden können, wobei der Rahmen üblicherweise einen Rahmenkopf, einen Nutzdatenbereich und einen Bereich für eine mögliche Fehlerkorrektur aufweist. Weitere oder weniger Bereiche im Rahmen können definiert werden. Dies ist alles optional, denn es ist auch möglich, letztlich nur die Nutzdaten in Rahmen, engl. Frames, zu übertragen.

In Ausführungsformen weisen die Daten über die Umgebung Objektdaten auf, wobei diese Objektdaten insbesondere Informationen über die jeweiligen Orte der jeweiligen Objekte aufweisen. Damit ist es dann der Sensorsimulation möglich, die Objekte an einem bestimmten Ort über die Sensorsimulation zu erfassen und damit entsprechende Sensordaten zu erzeugen, die dann als Bilddaten, vorverarbeitet oder als Rohdaten, an das Steuergerät gesendet werden können. Die Bilddaten können neben den Orten auch andere Objekteigenschaften wie beispielsweise deren Ausdehnung, räumliche Ausrichtung oder Form aufweisen. Auch ein Bewegungsvektor kann beispielsweise dazugehören.

Weiterhin ist es vorgesehen, dass der Sensorsimulator und der Umgebungssimulator wie oben bereits angegeben, jeweils einen eigenen Rechner zur Ausführung ihrer jeweiligen Simulation aufweisen, wobei insbesondere sowohl der Sensorsimulator als auch der Umgebungssimulator jeweils als eine eigene Baugruppe ausgestaltet sind. D. h. der Sensorsimulator und der Umgebungssimulator sind bezüglich ihrer Simulation unabhängig voneinander und haben eine eigene Hardware dafür, um die Berechnungen durchzuführen. Dabei kann der Rechner eine über einen Prozessor und/oder einen Mikrocontroller mit einem oder mehreren Kernen verfügen. Es kann auch eine Kombination aus einem Mikroprozessor und Signalprozessoren oder ähnlichem sein. Dazu gehört auch eine entsprechende Peripherie wie Schnittstellen, Speicher etc.

In einer Ausführungsform sind der Umgebungssimulator und der Sensorsimulator mit einem Datenkabel zur Übertragung der Daten verbunden. Dieses Kabel kann elektrisch oder optisch ausgeführt sein. Es kann hilfsweise koaxial ausgeführt sein, es kann mehrere Einzelkabel aufweisen oder beispielsweise auch mehrere Glasfasern.

In einer Ausführungsform verzögert der Sensorsimulator die Ausgabe zu einem Sensortaktzeitpunkt, falls seit der letzten Ausgabe von Bilddaten keine neuen Daten über die Umgebung durch die Umgebungssimulation übertragen wurden. Damit kann der Sensorsimulator auf neueste Umgebungsdaten warten, um aktuelle Bilddaten ausgeben zu können.

### Figurenliste

Ausführungsbeispiele der Anmeldung sind in den Figuren dargestellt und werden in der nachfolgenden Beschreibung näher erläutert.

Es zeigt
Figur 1 ein Blockschaltbild einer Simulationsvorrichtung mit einem angeschlossenen Steuergerät,
Figur 2 eine schematische Darstellung eines Egofahrzeugs mit mehreren Sensoreinrichtungen und Objekten in der Umgebung,
Figur 3 ein erstes Flussdiagramm des Verfahrens,
Figur 4 ein zweites Flussdiagramm des Verfahrens,
Figur 5 ein drittes Flussdiagramm des Verfahrens,
Figur 6 ein beispielhafter Datenrahmen zur Übertragung der Daten und
Figur 7 eine Tabelle zur Bestimmung des optimalen Zeitpunkts zur Übertragung der Daten.

Es werden in den Figuren die gleichen Bezugszeichen für gleiche oder ähnliche Elemente verwendet. Die Darstellungen in den Figuren können nicht maßstäblich sein.

### Fiaurenbeschreibuna

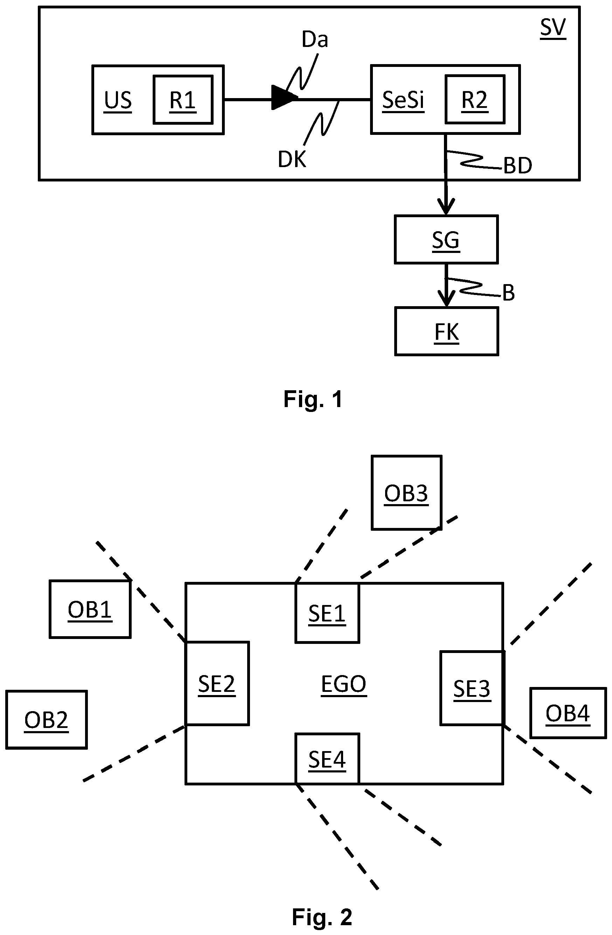

Figur 1 zeigt eine Simulationsvorrichtung SV, die an ein Steuergerät SG angeschlossen ist. Das Steuergerät SG ist wiederum mit einer Fahrzeugkomponente FK verbunden, an die das Steuergerät SG einen Befehl B zur Ausführung einer Fahrzeugfunktion versendet (z.B. einen Bremsbefehl überträgt). Die Simulationsvorrichtung SV weist einen Umgebungssimulator US auf, der einen ersten Rechner R1 aufweist, wobei der Rechner R1 zur Durchführung der Umgebungssimulation eingerichtet ist. Dafür weist der Rechner R1 entsprechende Algorithmen auf, um diese Umgebungssimulation durchzuführen, und kann dabei bspw. auf Initialdaten zugreifen, um die Umgebungssimulation auszuführen. Die Daten Da, die der Umgebungssimulator US bestimmt, werden über das Kabel DK an den Sensorsimulator SeSi übertragen. Der Sensorsimulator SeSi weist einen Rechner R2 auf, der mittels dieser Daten Da eine Sensorsimulation beispielsweise für einen Radarsensor, einen Kamerasensor oder einen LIDAR-Sensor ausführt. Die Bilddaten BD werden dann an das Steuergerät SG, das getestet wird, übertragen. Anhand der Bilddaten BD bestimmt das Steuergerät SG, ob die Fahrzeugfunktion mit der Fahrzeugkomponente FK ausgeführt wird oder nicht. Und gegebenenfalls bestimmt auch das Steuergerät SG, in welchem Maße die Fahrzeugfunktion ausgeführt wird. Dazu wird ein Befehl B an eine Fahrzeugkomponente FK übertragen. Diese Übertragung kann beispielsweise auch über ein fahrzeuginternes Kommunikationsnetz erfolgen.

Da der Umgebungssimulator US mit einem anderen Takt die Umgebung simuliert, als der Sensorsimulator SeSi die Sensorsimulation ausführt, wird gemäß dieser Anmeldung bestimmt, wann der Umgebungssimulator US die Daten Da an den Sensorsimulator SeSi überträgt. Maßgabe dabei ist, dass die Synchronisierung der beiden Simulationen weitestgehend gegeben ist. Eine Abweichung, die bspw. durch die anmeldungsgemäße Lösung vorgegeben ist, wird als ausreichende Synchronisierung angesehen. Beispielsweise arbeitet der Umgebungssimulator US mit einem Takt von 1 ms und der Sensorsimulator SeSi mit einem Takt von 30 ms, sodass hierfür der Umgebungssimulator US dann die zeitlich richtige Übertragung vornehmen soll. Auch die Datenübertragungskapazität des Datenkabels DK ist physikalisch begrenzt. Die Daten Da sind deshalb nicht innerhalb einer Millisekunde vollständig übertragbar. Auch die Verarbeitung der Daten Da sollte nur in dem notwendigen Maße erfolgen. Sind mehr Daten Da bspw. zu verarbeiten, ist ein leistungsfähigerer Rechner R1 und entsprechende Peripherie notwendig. Dies ist technisch und wirtschaftlich selten notwendig. Der Takt der Sensorsimulation SeSi kann ein ganzzahliges Vielfaches des Simulationstakts der Umgebungssimulation sein. Im Allgemeinen wird jedoch kein ganzzahliges Vielfaches vorliegen. Dann kann es über mehrere Simulationszyklen des Sensorsimulators SeSi zu deutlichen Abweichungen kommen, so dass der Sensorsimulator SeSi nicht mehr die aktuellen Daten Da abarbeiten kann.

Figur 2 zeigt das Ego-Fahrzeug EGO mit vier Umfeld-Sensoren SE1 bis SE4, die beispielhaft dargestellt sind. Diese Umfeld-Sensoren SE1 bis SE4 können Radar, LIDAR, Ultraschall oder Kameras oder Kombinationen davon sein. Die Umfeld-Sensoren SE1 bis SE4 erfassen Objekte OB1 bis OB4 in der Umgebung des Ego-Fahrzeugs EGO. Im dargestellten Beispiel erfassen die Sensoren SE1, SE2 und SE3 die jeweiligen Objekte OB3 und OB4 sowie die beiden Objekte OB1 und OB2. Der Unfallsensor SE4 erfasst kein Objekt. Diese Objekte OB1 bis OB4 werden für den Sensorsimulator SeSi durch die Daten Da vom Umgebungssimulator US vorgegeben.

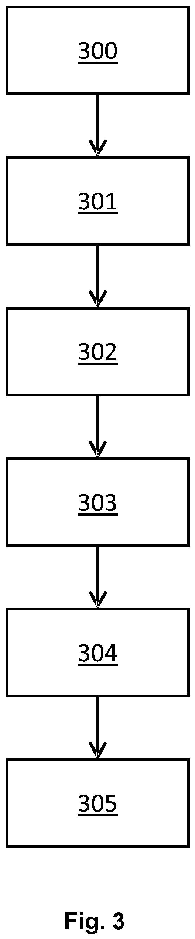

Figur 3 zeigt in einem ersten Flussdiagramm das Verfahren gemäß dieser Anmeldung. In Verfahrensschritt 300 erfolgt die Simulation der Umgebung des Ego-Fahrzeugs EGO. In Verfahrensschritt 301 bestimmt der Umgebungssimulator US in Abhängigkeit von den Simulationstaktzeitpunkten und den Sensortaktzeitpunkten, wann die Daten Da, die diese Umgebungssimulation repräsentieren an den Sensorsimulator SeSi übertragen werden sollen. In Verfahrensschritt 302 erfolgt dann die Übertragung der Daten Da. In Verfahrensschritt 303 verwendet dann der Sensorsimulator SeSi diese Daten Da für die Sensorsimulation. Im Verfahrensschritt 304 werden dann durch die simulierte Sensorsimulation die Bilddaten BD erzeugt. Dabei kann auch eine Vorverarbeitung der Bilddaten BD bereits erfolgen. Im Verfahrensschritt 305 werden dann die Bilddaten BD von der Simulationsvorrichtung SV an das Steuergerät SG ausgegeben.

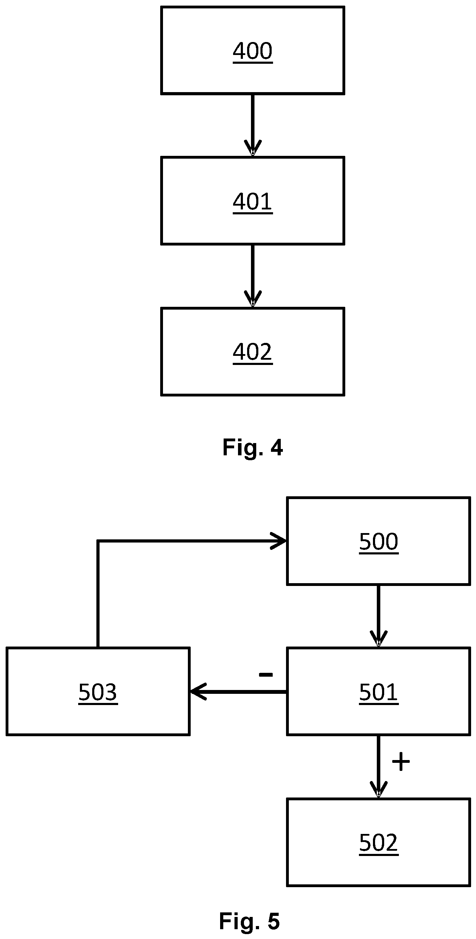

In Figur 4 wird in einem zweiten Flussdiagramm die Bestimmung des Zeitpunkts, wann die Daten Da an den Sensorsimulator SeSi übertragen werden, näher erläutert. Im Verfahrensschritt 400 wird die Differenz zwischen der Sensorzeit und der Simulationszeit gebildet. Die Sensorzeit hängt von den Sensortaktzeitpunkten ab und die Simulationszeit von den Simulationstaktzeitpunkten. Die Sensorzeit ist der Zeitpunkt des Übergangs vom jeweils aktuellen Sensorsimulationszyklus in den nachfolgenden Simulationszyklus. Entsprechend ist die Simulationszeit der Zeitpunkt des Übergangs vom jeweils aktuellen Simulationszyklus in den nachfolgenden Simulationszyklus. Mit dieser Differenz wird in Verfahrensschritte 401 der Zeitpunkt für die Übertragung bestimmt. Im Verfahrensschritt 402 erfolgt dann wie oben erläutert die Übertragung der Daten Da.

Figur 5 erläutert nun diese Bestimmung des Zeitpunkts für die Übertragung der Daten Da gemäß Figur 4 in einem Beispiel noch genauer. Im Verfahrensschritt 500 wird die Differenz aus der Sensorzeit und der Simulationszeit gebildet. Diese Differenz wird in Verfahrensschritt 501 mit einem Schwellenwert betragsgemäß verglichen. Ist die Differenz kleiner als dieser Schwellenwert erfolgt die Übertragung der Daten Da in Verfahrensschritt 502. Ist die Differenz jedoch größer als der Schwellenwert, dann erfolgt in Verfahrensschritt 503 die nächste Simulation der Umgebung. Es erfolgt dann der Rücksprung zu Verfahrensschritt 500, und das Verfahren wird erneut durchlaufen.

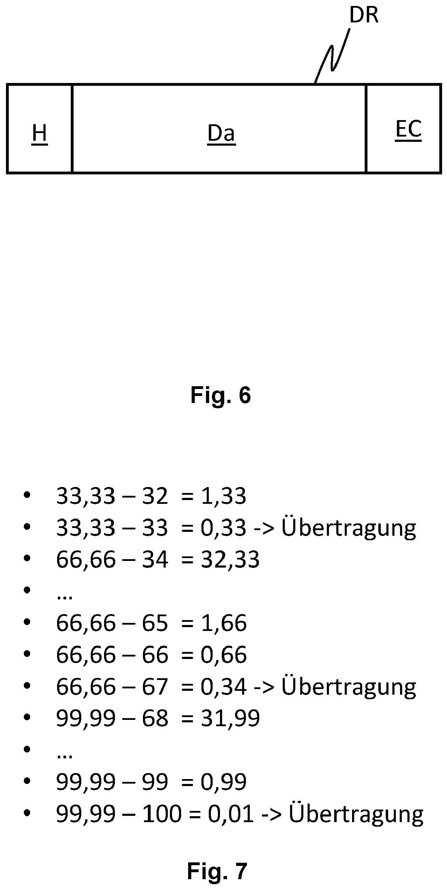

Figur 6 zeigt einen beispielhaften Rahmen DR (engl. Frame), mit dem die Daten Da vom Umgebungssimulator US an den Sensorsimulator SeSi übertragen werden. Der Datenrahmen DR weist einen Header H auf, der beispielsweise einen Zähler aufweist, dann folgt ein Bereich für die Nutzdaten Da also die Umgebungssimulation und schließlich ein dritter Bereich EC, der beispielsweise zu Fehlerkorrektur verwendet werden kann.

Figur 7 zeigt nun an einem konkreten Beispiel über eine Tabelle, wie der Zeitpunkt zum Senden bestimmt wird. Die Schwelle wird hier mit 0,5ms festgelegt, die Simulationszeit des Umgebungssimulator US beträgt 1ms und die Sensorzeit des Sensorsimulator SeSi beträgt 33,33 Millisekunden (30 Hz).

Zu Beginn wird demnach bei der ersten Umgebungssimulation 1ms von 33,33ms abgezogen, sodass dann 32,33ms als Differenz übrigbleiben. Diese Differenz liegt deutlich über dem Schwellenwert von 0,5ms. D.h. es erfolgt keine Übertragung der Daten Da. Dies wird dann so lange wiederholt, bis man zur ersten Zeile in der Figur 7 gelangt, nämlich dass nun die 32. Simulation der Umgebung erfolgt ist und damit eine Differenz von 1,33ms auftritt. Im nächsten Schritt nach der 33. Simulation ist die Differenz demnach nur noch 0,33ms, sodass der Schwellenwert unterschritten wird und damit das Versenden der Daten Da vom Umgebungssimulator US zum Sensorsimulator SeSi erfolgen kann. Dann wird zur nächsten Sensorsimulation gesprungen, sodass man dann bei einer kumulierten Sensorzeit von 66,66ms liegt. Mit der nächsten Umgebungssimulation ist man jedoch bei einem Wert von 34ms für die kumulierte Simulationszeit, sodass dann die Differenz 32,33ms ist. Dies wird dann Millisekunde für Millisekunde wiederholt, bis man zur 65. Sensorsimulation gelangt, die dann zu einer Differenz von 1,66ms in der vierten Zeile der Tabelle führt. Die nächste Simulation in der folgenden Zeile führt zu einer Differenz von 0,66ms, sodass man immer noch über dem Schwellenwert von 0,5ms liegt. In der folgenden Zeile kommt man aber zu einer Differenz von - 0,34ms. Damit liegt der Betrag der Differenz unter dem Schwellenwert, sodass das Versenden der Daten Da erfolgen kann. Dies führt zur nächsten Sensorsimulation, so dass dann in der nächsten Zeile bei der Sensorsimulation auf den Wert 99,99ms gesprungen wird. Nach dem Senden der Daten Da liegt jedoch bei der Umgebungssimulation die 68. Simulation vor, sodass die Differenz 31,99ms beträgt. Zur Vereinfachung wird dann zur 99. Umgebungssimulation gesprungen. Die Differenz beträgt nun 0,99ms. Der Differenzbetrag liegt also weiter über dem Schwellenwert von 0,5ms.

Nach der 100. Umgebungssimulation liegt dann eine Differenz von -0,01ms also betragsgemäß 0,01ms, so dass nun wieder ein Versenden der Daten Da erfolgen kann. Dieses Beispiel lehrt, dass für die Bestimmung des optimalen Synchronisationszeitpunkts eine Betragsbildung der Differenz erforderlich ist. Hier verzögert der Umgebungssimulator US das Versenden der Daten Da zum Sensorsimulator SeSi vom Sensortaktzeitpunkt 99,99 auf den Zeitpunkt 100, also dem Zeitpunkt des nächsten Simulationstaktes, um sicherzustellen, dass der nächste Sensortakt mit den aktuellen Daten Da ausgeführt werden kann.

**Bezugszeichen**

| | |
|---|---|
| US | Umgebungssimulator |
| R1, R2 | Rechner |
| Da | Daten |
| DK | Datenkabel |
| SeSi | Sensorsimulator |
| BD | Bilddaten |
| SV | Simulationsvorrichtung |
| SG | Steuergerät |
| B | Befehl |
| FK | Fahrzeugkomponente |
| OB1, OB2, OB3, OB4 | Objekte |
| SE1, SE2, SE3, SE4 | Sensoren |
| EGO | Fahrzeug |
| 300-305, 400-402, 500-503 | Verfahrensschritte |
| DR | Rahmen |
| H | Header |
| EC | Fehlerkorrektur |

## Patentansprüche

1. Simulationsvorrichtung (SV) zur Ausgabe von Bilddaten (BD) einer virtuellen Umgebung eines Fahrzeugs (EGO) an ein Steuergerät (SG), welches ausgebildet ist, in Abhängigkeit von den Bilddaten (BD) mindestens eine Fahrzeugfunktion auszuführen, mit
einem Umgebungssimulator (US), der ausgebildet ist, die Umgebung des Fahrzeugs (EGO) zu simulieren, und Daten (Da) über die Umgebung an einen Sensorsimulator (SeSi) zu übertragen, welcher ausgebildet ist, in Abhängigkeit von den Daten (Da) über die Umgebung wenigstens einen Sensor (SE1, SE2, SE3, SE4) des Fahrzeugs (EGO) zur Erfassung der Umgebung zu simulieren und die Bilddaten (BD) in Abhängigkeit von seiner Simulation auszugeben,
wobei der Umgebungssimulator (US) ausgebildet ist, die Daten (Da) über die Umgebung zu Simulationstaktzeitpunkten zu ermitteln und in Abhängigkeit von den Simulationstaktzeitpunkten an den Sensorsimulator (SeSi) zu übertragen, und wobei der Sensorsimulator (SeSi) ausgebildet ist, die Bilddaten (BD) zu Sensortaktzeitpunkten auszugeben, wobei Informationen über die Sensortaktzeitpunkte in dem Umgebungssimulator (US) hinterlegt sind, wobei der Umgebungssimulator (US) ausgebildet ist, die Daten (Da) in Abhängigkeit von den Sensortaktzeitpunkten an den Sensorsimulator (SeSi) zu übertragen.

2. Vorrichtung nach Anspruch 1, wobei der Umgebungssimulator (US) ausgebildet ist, eine Differenz zwischen Simulationstaktzeitpunkten und Sensortaktzeitpunkten zu bilden und die Daten (Da) in Abhängigkeit von dieser Differenz zu übertragen.

3. Vorrichtung nach Anspruch 2, wobei der Umgebungssimulator (US) ausgebildet ist, die Differenz mit einem Schwellenwert zu vergleichen und die Daten (Da) in Abhängigkeit von diesem Vergleich zu übertragen.

4. Vorrichtung nach einem der vorhergehenden Ansprüche, wobei der Umgebungssimulator (US) ausgebildet ist, die Daten (Da) in Datenrahmen (DR) zu übertragen.

5. Vorrichtung nach einem der vorhergehenden Ansprüche, wobei die Daten (Da) Informationen über Objekte (OB1, OB2, OB3, OB4) in der Umgebung aufweisen, wobei die Daten (Da) insbesondere Informationen über die jeweiligen Orte der Objekte (OB1, OB2, OB3, OB4) aufweisen.

6. Vorrichtung nach einem der vorhergehenden Ansprüche, **dadurch gekennzeichnet, dass** der Sensorsimulator (SeSi) und der Umgebungssimulator (US) jeweils einen jeweiligen Rechner (R1, R2) zur Ausführung ihrer jeweiligen Simulation aufweisen.

7. Vorrichtung nach einem der vorhergehenden Ansprüche, wobei zwischen dem Umgebungssimulator (US) und dem Sensorsimulator (SeSi) ein Datenkabel zur Übertragung der Daten (Da) vorgesehen ist.

8. Testaufbau mit einer Simulationsvorrichtung nach einem der vorherigen Ansprüche und mit dem Steuergerät, welches in Abhängigkeit von den Bilddaten (BD) hinsichtlich seiner Fahrzeugfunktion testbar ist.

9. Verfahren zur Ausgabe von Bilddaten (BD) einer virtuellen Umgebung eines Fahrzeugs (EGO) an ein Steuergerät (SG), das in Abhängigkeit von den Bilddaten (BD) mindestens eine Fahrzeugfunktion ausführt und damit hinsichtlich dieser Fahrzeugfunktion getestet wird, wobei das Verfahren auf einer Simulationsvorrichtung (SV) ausgeführt wird, mit folgenden Verfahrensschritten
ein Umgebungssimulator (US) simuliert die Umgebung des Fahrzeugs (EGO), und überträgt die Daten (Da) über die Umgebung an einen Sensorsimulator (SeSi),
der Sensorsimulator (SeSi) simuliert mindestens einen Sensor (SE1, SE2, SE3, SE4) des Fahrzeugs (EGO) zur Erfassung der Umgebung in Abhängigkeit von den Daten (Da) über die Umgebung und gibt die Bilddaten (BD) in Abhängigkeit von dieser Simulation aus, wobei der Umgebungssimulator (US) die Daten (Da) über die Umgebung zu Simulationstaktzeitpunkten ermittelt und in Abhängigkeit von den Simulationstaktzeitpunkten an den Sensorsimulator (SeSi) überträgt, und wobei der Sensorsimulator (SeSi) die Bilddaten (BD) zu Sensortaktzeitpunkten ausgibt, wobei Informationen über die Sensortaktzeitpunkte in dem Umgebungssimulator (US) hinterlegt sind, wobei der Umgebungssimulator (US) die Daten (Da) in Abhängigkeit von den Sensortaktzeitpunkten an den Sensorsimulator (SeSi) überträgt.

10. Verfahren nach Anspruch 9, wobei der Umgebungssimulator (US) eine Differenz zwischen Simulationstaktzeitpunkten und Sensortaktzeitpunkten bildet und die Daten (Da) in Abhängigkeit von dieser Differenz überträgt.

11. Verfahren nach Anspruch 10, wobei der Umgebungssimulator (US) die Differenz mit einem Schwellenwert vergleicht und die Daten (Da) in Abhängigkeit von diesem Vergleich überträgt.

12. Verfahren nach einem der Ansprüche 9 bis 11, wobei der Umgebungssimulator (US) die Daten (Da) in Rahmen (DR) überträgt.

13. Verfahren nach einem der Ansprüche 9 bis 12, wobei der Sensorsimulator (SeSi) die Ausgabe zu einem Sensortaktzeitpunkt verzögert, falls seit der letzten Ausgabe von Bilddaten (BD) keine neuen Daten (Da) über die Umgebung durch die Umgebungssimulation (US) übertragen wurden.
